# EUROPÄISCHE PATENTSCHRIFT

(11) **EP 2 597 359 B1**
(45) Veröffentlichungstag und Bekanntmachung des Hinweises auf die Patenterteilung: **02.01.2019**
(21) Anmeldenummer: 12192572.1
(22) Anmeldetag: 14.11.2012
(51) Int. Cl.: F21S 41/147, F21S 41/29, F21S 41/255, F21S 41/698, G02B 27/02, G02B 19/00

(54) **Projektions-Lichtmodul für einen Kraftfahrzeugscheinwerfer**
Projection light module for a motor vehicle headlamp
Module de lumière à projection pour un phare de véhicule automobile

(30) Priorität: 28.11.2011 DE 202011108359 U
(43) Veröffentlichungstag der Anmeldung: 29.05.2013
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, 72793 Pfullingen (DE); Heusing, Klaus, 98599 Brotterode (DE)
(74) Vertreter: DREISS Patentanwälte PartG mbB

(56) Entgegenhaltungen:
- EP-A1- 0 816 748
- EP-A2- 0 508 157
- EP-A2- 0 985 871
- DE-A1- 4 310 048
- DE-A1-102004 011 090
- DE-A1-102005 044 237
- DE-A1-102007 053 399
- DE-A1-102008 013 921
- DE-A1-102010 054 922

## Beschreibung

Die vorliegende Erfindung betrifft ein Projektions-Lichtmodul für einen Kraftfahrzeugscheinwerfer nach dem Oberbegriff des Anspruchs 1. Ein solches Projektions-Lichtmodul weist eine Komplexlichtquelle mit einem Trägerelement und einen Linsenhalter auf, mit dem eine Sekundäroptik des Projektions-Lichtmoduls an dem Trägerelement befestigt ist Ein solches Projektions-Lichtmodul ist zum Beispiel aus der DE 10 2009 032 456 A1 oder EP 0 985 871 A2 bekannt.

Dabei wird unter einer Komplexlichtquelle hier die bauliche Einheit aus einer Lichtquelle, einer Primäroptik, einer Blende sowie des diese Elemente relativ zueinander zusammenhaltenden Trägerelements verstanden.

Die Primäroptik fokussiert Licht der Lichtquelle in eine erste Lichtverteilung, die im Inneren des Projektionslichtmoduls liegt. Die erste Lichtverteilung wird durch eine in die erste Lichtverteilung hineinragende Kante einer Blende begrenzt.

Darüber hinaus weist das Projektions-Lichtmodul eine Sekundäroptik auf, die auf die erste Lichtverteilung fokussiert ist und welche die erste Lichtverteilung als zweite Lichtverteilung in das Vorfeld vor dem Kraftfahrzeugscheinwerfer abbildet.

Das Trägerelement dient als strukturelle Basis der Komplexlichtquelle und des gesamten Projektions-Lichtmoduls. Ein solches Trägerelement kann entweder ein gesondertes Bauteil sein oder es kann zum Beispiel durch einen entsprechend stabilen, als Primäroptik dienenden Reflektor verwirklicht sein. Dies ist bei der eingangs genannten DE 10 2009 032 456 A1 der Fall.

An einem solchen Trägerelement sind die einzelnen genannten Elemente direkt oder indirekt befestigt. So ist zum Beispiel eine als Sekundäroptik dienende Projektionslinse in der Regel über einen Linsenhalter mit dem Trägerelement verbunden. Der Linsenhalter dient insbesondere auch dazu, einen vorgegebenen Abstand der Sekundäroptik von der Blendenkante herzustellen. Dieser Abstand entspricht in der Regel der Brennweite der Projektionslinse.

Da die Blendenkante in ihrer Abblendlichtstellung in der Nähe der Brennebene der Projektionslinse liegt, wird die Blendenkante als Hell-Dunkel-Grenze höhen- und seitenverkehrt in das Vorfeld vor das Projektions-Lichtmodul projiziert.

Die Hell-Dunkel-Grenze trennt also einen hellen Bereich von einem dunklen Bereich der Lichtverteilung des Projektions-Lichtmoduls ab. Der Abstand der Linse von der Blendenkante und die Winkellage der Linse relativ zur optischen Achse beeinflussen die Qualität der Abbildung der Blendenkante als Hell-Dunkelgrenze der Lichtverteilung.

Beim Durchgang von weißem Licht durch eine Linse werden Lichtanteile mit vergleichsweise größerer Wellenlänge (zum Beispiel rotes Licht) schwächer gebrochen als Lichtanteile mit vergleichsweise kürzerer Wellenlänge (zum Beispiel blaues Licht), was auch als chromatische Aberration bekannt ist. Die Ursache dafür ist eine Wellenlängenabhängigkeit der Brechzahl der Linse. Dies führt dazu, dass der Brennpunkt für blaues Licht näher an der Linse liegt als der Brennpunkt für rotes Licht. Letzteres ist auch als Farblängsfehler bekannt.

Als Folge kann sich in der zweiten Lichtverteilung an der Hell-Dunkel-Grenze ein Farbsaum ergeben. Dabei wird unter einem Farbsaum der Effekt verstanden, dass an der Hell-Dunkel-Grenze ein schmaler eher rötlich oder eher bläulich gefärbter Übergangsbereich sichtbar ist.

Die Färbung und Deutlichkeit dieses unerwünschten Effektes hängt von dem Abstand der Linse von der Blendenkante und von der Winkellage der Linse relativ zur optischen Achse ab. Der Einfluss des Abstandes wird in der DE 10 2008 021 520 A1 veranschaulicht und im Folgenden kurz zusammengefasst.

Betrachtet wird eine Projektionslinse, die eine Brennweite aufweist. Genau genommen muss man hier von einer mittleren Brennweite sprechen, da die Brennweite wellenlängenabhängig ist und insbesondere für blaues Licht kleiner als für rotes Licht ist. Blaues Licht wird also stärker gebrochen als rotes Licht. Ein optisches System, zum Beispiel die Primäroptik des Projektions-Lichtmoduls, fokussiert weißes Licht in die erste Lichtverteilung, die sich im Abstand der mittleren Brennweite der Sekundäroptik vor der Sekundäroptik befindet. Von der ersten Lichtverteilung geht dann divergentes weißes Licht aus und fällt auf eine Lichteintrittsfläche der Linse. Eine Blende wird quer zu einer optischen Achse der Linse soweit in den Strahlengang geschoben, dass die optische Achse die Blendenkante streifend berührt.

Je nachdem, ob die Blende in Propagationsrichtung des Lichtes vor oder hinter der ersten Lichtverteilung in den Strahlengang geschoben wird, ergeben sich unterschiedlich gefärbte Farbsäume. Liegt die Blende zwischen der ersten Lichtverteilung und der Linse und damit innerhalb der mittleren Brennweite, ergibt sich ein rötlich gefärbter Übergangsbereich, also ein von einem roten Farbeindruck dominierter Farbsaum. Liegt die Blende dagegen in Lichtausbreitungsrichtung vor der ersten Lichtverteilung, also außerhalb der mittleren Brennweite, ergibt sich ein bläulich gefärbter Übergangsbereich, also ein bläulicher Farbsaum.

Die Färbung und die Intensität des störenden Farbsaums hängen also insbesondere von der Position der Blende in Bezug auf die Brennweite der Projektionslinse ab. Bei unkorrekter Lage kann es insbesondere zu unerwünscht farbintensiven Farbsäumen an der Hell-Dunkel-Grenze kommen.

Bei dem Gegenstand, der aus der eingangs genannten DE 10 2009 032 456 A1 bekannt ist, besteht der Linsenhalter aus Blech und weist einen Aufnahmering für die Aufnahme der Linse und wenigstens drei von dem Aufnahmering wegragende Streben auf, die zur Herstellung des für die Abbildung der Blendenkante erforderlichen Abstands zwischen der Blendenkante und der Linse dienen. Jede Strebe weist eine Lasche auf, die zur Befestigung der Strebe an dem Trägerelement der Komplexlichtquelle, dort insbesondere an dem Reflektor, dient.

Der Aufnahmering ist dazu eingerichtet mit einem Linsenhaltering verbunden zu werden, der die Linse in axialer Richtung in dem Aufnahmering festhält. Bei der Herstellung des Projektions-Lichtmoduls wird die Linse in den Aufnahmering eingesetzt.

Dann wird die genaue Position der Linse in dem Aufnahmering zum Zweck der Farbsaumkorrektur eingestellt, und die Linse wird in der eingestellten Position fixiert.

Anschließend wird der Linsenhaltering über den Rand der Linse geschoben. In der Endlage des Linsenhalterings wird dieser im Bereich der darunter liegenden Ausnehmungen im Aufnahmering radial einwärts eingedrückt und damit kraft- und formschlüssig mit dem Aufnahmering verbunden. Die Linse wird im Ergebnis zwischen dem Aufnahmering und dem damit verpressten Linsenhaltering in einem festen Abstand zur Blende festgehalten.

Bei modernen Kraftfahrzeugscheinwerfern haben die Projektions-Lichtmodule über ihre lichttechnische Funktion hinaus immer mehr auch steigenden Anforderungen an ihr Erscheinungsbild zu genügen. Dabei wird angestrebt, Linsenhalter aus Kunststoff verwenden zu können, da sich aus der Verwendung von Kunststoff gestalterische Freiheitsgrade ergeben, die sich zumindest bei gleichen Kosten mit metallischen Linsenhaltern nicht verwirklichen lassen.

Vor diesem Hintergrund besteht die Aufgabe der Erfindung in der Angabe eines Projektions-Lichtmoduls der eingangs genannten Art, das eine Verwendung von Kunststoff als Material für den Linsenhalter erlaubt. Das Projektions-Lichtmodul muss dabei insbesondere eine Farbsaumkorrektur durch eine Einstellung des Abstands zwischen Linse und Blendenkante erlauben und es soll aus gestalterischen Gründen auch eine Verwendung von Linsen erlauben, die keinen kreisförmigen Umfang besitzen.

Durch die Abkehr von der Kreisform des Linsenumfangs und durch den Wechsel von Metall zu Kunststoff als Material für den Linsenhalter ist die aus der DE 10 2009 032 456 A1 bekannte Art der Fixierung der Linse relativ zur Blende nicht mehr brauchbar. Die Lösung der gestellten Aufgabe erfordert also insbesondere eine völlige Neugestaltung einer Verbindung von Linse und Trägerelement mit einstellbarem Abstand zwischen der Linse und der vom Trägerelement gehaltenen Blende.

Diese Aufgabe wird mit den Merkmalen des Anspruchs 1 gelöst.

Von dem eingangs genannten Stand der Technik unterscheidet sich die vorliegende Erfindung dadurch, dass der Linsenhalter erste Führungselemente und das Trägerelement zweite Führungselemente aufweist, und dass das Projektions-Lichtmodul Feststellelemente aufweist, die dazu eingerichtet und angeordnet sind, sowohl in die ersten Führungselemente als auch in die zweiten Führungselemente einzugreifen und eine gegeneinander erfolgende Verschiebung der Führungselemente zu blockieren, wobei die ersten Führungselemente und die zweiten Führungselemente ineinander greifen und aufeinander abgestimmt dazu eingerichtet sind, bei gelösten Feststellelementen eine gegeneinander erfolgende Verschiebung zu erlauben, die parallel zu einer optischen Achse des Projektionslichtmoduls erfolgt.

Erfindungsgemäß wird durch die ineinander greifenden ersten Führungselemente und zweiten Führungselemente, die bei gelösten oder nicht festgestellten Feststellelementen eine parallel zur optischen Achse erfolgende Verschiebung erlauben, der Abstand zwischen der Linse und dem Trägerelement und damit letztlich zwischen der Linse und der Blendenkante eingestellt, um eine Farbsaumkorrektur zu ermöglichen. Durch die Feststellelemente lässt sich die Verschiebung anschließend blockieren, so dass eine einmal durchgeführte Farbsaumkorrektur erhalten bleibt. Eine bevorzugte Ausgestaltungzeichnet sich dadurch aus, dass die Feststellelemente Schrauben sind.

Im Rahmen einer alternativen Ausgestaltung sind die Feststellelemente Stifte, die wenigstens eine Schneidkante aufweisen, die parallel zur Längsachse eines solchen Stiftes verläuft und aus dem Kerndurchmesser eines solchen Stiftes seitlich herausragt.

Bevorzugt ist auch, dass die Feststellelemente in Bohrungen in den zweiten Führungselementen geführt werden, die quer zur optischen Achse ausgerichtet und so angeordnet sind, dass die ersten Führungselemente und die zweiten Führungselemente beim Eindrehen oder Einschieben der Feststellelemente gegeneinander verspannt werden.

Ferner ist bevorzugt, dass die Bohrung relativ zu einer Ausnehmung im zweiten Führungselement so angeordnet ist, dass Gewindeflanken oder Schneidkanten eines durch die Bohrung geführten Feststellelements in die Ausnehmung im zweiten Führungselement hineinragen, so dass Gewindeflanken oder Schneidkanten des Feststellelementes beim Eindrehen oder Einschieben in die Bohrung, die sich im zweiten Führungselement befindet, in ein erstes Führungselement einschneiden, das sich in der Ausnehmung des zweiten Führungselementes befindet.

Bevorzugt ist auch, dass der Durchmesser der Bohrung einem Kerndurchmesser oder einem Außendurchmesser des Feststellelements entspricht.

Ferner ist bevorzugt, dass die Bohrung relativ zur Ausnehmung so liegt, dass eine Begrenzungsfläche der Ausnehmung die Zylindermantelfläche der Bohrung berührt oder durchbricht.

Bevorzugt ist auch, dass der Querschnitt der Ausnehmung im zweiten Führungselement und der dazu komplementäre Querschnitt des ersten Führungselementes in der zur Verschieberichtung senkrechten Ebene eine Form besitzt, bei der sich der jeweilige Durchmesser des Querschnitts in der Richtung der Längsachse der Schraube mit zunehmendem radialen Abstand von der Schraube verringert.

Ein weitere bevorzugte Ausgestaltung zeichnet sich dadurch aus, dass die zweiten Führungselemente an dem Trägerelement so angeordnet und so ausgerichtet sind, dass sich der Durchmesser eines Querschnitts, den ein zweites Führungselement aufweist, sich in einer Richtung verringert, die zu der Richtung entgegengesetzt ist, in der sich der Durchmesser des Querschnitts eines benachbarten zweiten Führungselementes verringert.

Bevorzugt ist auch, dass wenigstens die ersten Führungselemente aus Kunststoff bestehen.

Aus den Ausgestaltungen resultierende Vorteile ergeben sich aus der Beschreibung und den beigefügten Figuren.

Es versteht sich, dass die vorstehend genannten und in nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Fahrzeugscheinwerfer als technisches Umfeld der Erfindung;
- Fig. 2: ein Ausführungsbeispiel der Erfindung in Form eines Projektions-Lichtmoduls für einen Kraftfahrzeugscheinwerfer;
- Fig. 3: Vorderansichten eines einzelnen ersten Führungselementes und eines einzelnen zweiten Führungselementes;
- Fig. 4: einen Schnitt durch eine Verbindung zwischen dem ersten Führungselement und dem zweiten Führungselement gemäß Figur 3;
- Fig. 5: einen Schnitt durch den Gegenstand der Figur 4; und
- Fig. 6: eine Vorderansicht eines Trägerelements mit vier angeformten zweiten Führungselementen.

Dabei bezeichnen gleiche Bezugszeichen in den verschiedenen Figuren jeweils gleiche oder zumindest ihrer Funktion nach gleiche Elemente.

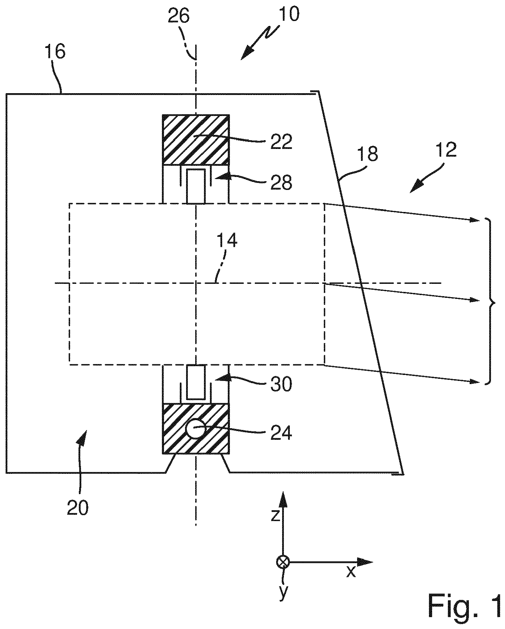

Figur 1 zeigt das technische Umfeld der Erfindung in Form eines Kraftfahrzeugscheinwerfers 10. Im Unterschied zu einer Leuchte ist ein Kraftfahrzeugscheinwerfer eine Beleuchtungsvorrichtung, die dazu eingerichtet ist, den Fahrweg eines Kraftfahrzeugs so zu beleuchten, dass ein Fahrer des Kraftfahrzeuges im Fahrweg liegende Hindernisse rechtzeitig erkennen kann. Zu diesem Zweck gibt der Schweinwerfer ein gerichtetes Lichtbündel 12 aus, das im Vorfeld des Schweinwerfers 10 eine vorbestimmte, gesetzlichen Anforderungen genügende Lichtverteilung erzeugt

Die Figur 1 zeigt insbesondere einen stark schematisierten Querschnitt eines Scheinwerfers 10, wobei die Schnittebene parallel zu einer optischen Achse 14 des Scheinwerfers 10 liegt.

In einigen Figuren ist ein Koordinatensystem dargestellt, mit dem sich die verschiedenen, in den Figuren verwendeten Blickrichtungen aufeinander beziehen lassen. Dabei handelt es sich um ein mit dem Scheinwerfer 10 fest verbundenes Koordinatensystem. Bei einer bestimmungsgemäßen Verwendung des Scheinwerfers 10 in einem Kraftfahrzeug ist die x-Richtung parallel zur Längsachse des Fahrzeugs und weist nach vorn, während die y-Richtung parallel zu einer Querachse liegt und die z-Richtung parallel zu einer Hochachse des Fahrzeugs liegt.

Der Scheinwerfer 10 weist ein Gehäuse 16 mit einer Lichtaustrittsöffnung auf. Die Lichtaustrittsöffnung wird durch eine transparente Abdeckscheibe 18 abgedeckt. Im Inneren des Gehäuses 16 ist ein Projektions-Lichtmodul 20 angeordnet. Das Projektions-Lichtmodul 20 weist in der dargestellten Ausgestaltung einen äußeren Rahmen 22 auf, der um eine erste Achse 24 schwenkbar im Gehäuse 16 gelagert ist. Die erste Achse 24 liegt quer zur optischen Achse 14, die im Übrigen einer Hauptlichtabstrahlrichtung entspricht. Darüber hinaus liegt die erste Achse 24 bei einer bestimmungsgemäßen Verwendung quer zu einer Hochachse des Kraftfahrzeugs und damit bei einem Fahrzeug auf ebenem Untergrund insgesamt parallel zum Horizont. Die Schwenkbarkeit um die erste Achse 24 herum erlaubt eine Leuchtweitenregelung, die dadurch erfolgt, dass eine Neigung des Kraftfahrzeugs erfasst wird und die Schwenkstellung des Projektions-Lichtmoduls 20 um die erste Achse 24 in Abhängigkeit von der erfassten Neigung automatisch so eingestellt wird, dass die Abstrahlrichtung des Lichtbündels 12 unabhängig von der Neigung des Kraftfahrzeugs konstant ist. Außerdem erlaubt sie eine gesteuerte Veränderung der Reichweite, da diese sich bei einem Aufwärtsschwenken vergrößert. Dies wird in einer Ausgestaltung zum Anheben des Lichtbündels für eine Autobahnlicht-Lichtverteilung genutzt.

In dem äußeren Rahmen 22 ist eine Baugruppe des Projektionslichtmoduls um eine zweite Achse 26 herum schwenkbar aufgehängt. Die zweite Achse 26 liegt bei einer bestimmungsgemäßen Verwendung in einem Kraftfahrzeug im Wesentlichen parallel zu einer Hochachse des Kraftfahrzeugs. Die exakte Lage in Bezug auf die Hochachse hängt natürlich von der Schwenkstellung des äußeren Rahmens 22 in Bezug auf die erste Achse 24 ab. Die erste Achse 24 und die zweite Achse 26 sind bevorzugt rechtwinklig zueinander ausgerichtet. Die Schwenkbarkeit um die zweite Ache 26 herum erlaubt im Betrieb des Kraftfahrzeugs ein Schwenken des Lichtbündels 12 nach rechts und links, um die Fahrbahn bei einer Kurvenfahrt besser auszuleuchten. Dazu wird das Lichtbündel 12 zum Kurveninnenrand geschwenkt, z.B. in Abhängigkeit von einem zu diesem Zweck erfassten Lenkeinschlagwinkel.

Die schwenkbare Halterung erfolgt in einem oberen Lager 28 und einem unteren Lager 30. Fig. 1 zeigt jedes der beiden Lager schematisch als Paarung aus einem Lagerzapfen und einer Lagerhülse, wobei der Lagerzapfen jeweils ein Bestandteil der im äußeren Rahmen 22 gelagerten Baugruppe ist. Diese Anordnung kann aber auch bei einem der Lager oder auch bei beiden Lagern anders herum sein. Es können auch verschiedene Lager verwendet werden. Die grundsätzliche Funktionsweise der Kurvenlichtfunktion und des für eine Kurvenlichtfunktion verwendeten Antriebs sind dem Fachmann vertraut und bedürfen hier keiner weiteren Erläuterung.

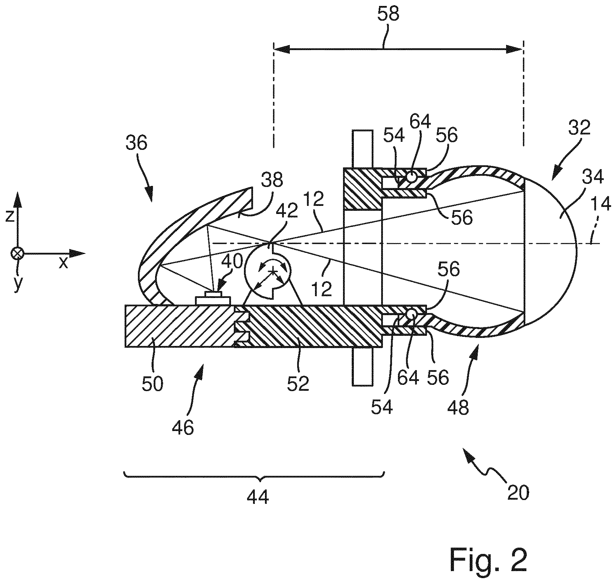

Fig. 2 zeigt ein Ausführungsbeispiel eines schwenkbaren Projektions-Lichtmoduls 20, das Merkmale der Erfindung aufweist. Ein erfindungsgemäßes Projektions-Lichtmodul 20 muss aber nicht sämtliche der in der Fig. 2 oder auch der in der Fig. 1 dargestellten Merkmale aufweisen. Es muss insbesondere weder für eine Leuchtweitenregelung um eine erste Achse 24 herum noch für eine Kurvenlichtfunktion um eine zweite Achse 26 herum schwenkbar sein. Wesentlich ist jedoch, dass es sich um ein Projektions-Lichtmodul handelt, unabhängig davon, ob dabei eine Kurvenlichtfunktion und/oder eine Leuchtweitenregelung verwirklicht ist.

Ein Projektions-Lichtmodul 20 weist eine Sekundäroptik 32 auf, die dazu eingerichtet ist, eine innere Lichtverteilung, die sich im Inneren des Projektions-Lichtmoduls 20 im Abstand einer Brennweite der Sekundäroptik 32 im Lichtweg vor der Sekundäroptik 32 aus dem Licht 12 einer Lichtquelle 40 des Projektions-Lichtmoduls 20 bildet oder gebildet wird, als äußere Lichtverteilung in das Vorfeld des Scheinwerfers 10 zu projizieren. Die Sekundäroptik 32 ist in der Regel eine Projektionslinse 34.

Dabei wird unter einer Linse hier ein transparenter Festkörper verstanden, dessen Licht richtende optische Wirkung auf der Brechung von Licht beim Eintritt in den Festkörper und beim Austritt aus dem Festkörper beschränkt ist. Als Alternative zu einer solchen Linse kann auch ein transparenter Festkörper dienen, bei dem sich die Licht richtende Wirkung zumindest zu einem Teil auch durch interne Totalreflexion des Lichtes an Grenzflächen des Festkörpers ergibt. Im Folgenden wird an Stelle des Begriffs der Sekundäroptik in der Regel der anschaulichere Begriff einer Linse oder Projektionslinse 34 verwendet, wobei dies aber immer so zu verstehen ist, dass die Linse 34 auch durch den genannten alternativen Festkörper ersetzt werden könnte, der die Eigenschaft einer internen Totalreflexion nutzt.

Bei einem direkt abbildenden System kann die innere Lichtverteilung eine Lichtverteilung sein, wie sie direkt von einer Lichtquelle bereitgestellt wird. Es kann sich zum Beispiel um die Lichtaustrittsfläche einer Halbleiterlichtquelle handeln, die sich ihrerseits aus den Lichtaustrittsflächen einer oder mehrerer Leuchtdioden oder Laserdioden zusammensetzt. Für Scheinwerfer von Kraftfahrzeugen werden weißes Licht abgebende Leuchtdioden verwendet, die jeweils einzeln eine quadratische oder rechteckige Lichtaustrittsfläche mit Kantenlängen zwischen etwa 0,5 mm und 2 mm aufweisen.

Größere Lichtaustrittsflächen werden mosaikartig zusammengesetzt, und zwar entweder aus den Lichtaustrittsflächen der Dioden oder aus den Lichtaustrittsflächen von Licht der Dioden sammelnden und richtenden Primäroptiken, die vom Licht jeweils einer oder mehrerer Dioden gespeist werden.

In der Regel wird die innere Lichtverteilung aus Licht erzeugt, das durch eine Primäroptik auf einen Punkt oder einen kleinen Bereich innerhalb des Projektions-Lichtmoduls fokussiert wird, der sich im Abstand einer Brennweite der Projektionslinse 34 im Lichtweg vor der Projektionslinse 34 befindet.

Eine solche Fokussierung erfolgt beim Gegenstand der Fig. 2 durch eine Primäroptik 36 in Form eines Reflektors 38, der dazu eingerichtet ist, von einem ersten Brennpunkt des Reflektors 38 ausgehendes Licht in einen zweiten Brennpunkt des Reflektors 38 zu fokussieren. Dies ist bekanntlich bei einem Ellipsoidreflektor der Fall, bei dem die Lichtquelle 40 in dem einen Brennpunkt sitzt. Die Projektionslinse wird dann auf den anderen, zweiten Brennpunkt des Reflektors 38 fokussiert angeordnet.

Abweichend von der rein elliptischen Form sind aber auch andere Formen üblich, bei denen der Reflektor 38 so geformt ist, dass er eine innere Lichtverteilung mit einer gewünschten Form erzeugt. Dies wird in einer Ausgestaltung zum Beispiel durch sogenannte Freiformreflektoren erzielt, deren Form so berechnet und den Berechnungen folgend hergestellt wird, dass vorbestimmte Flächenelemente des Reflektors 38 auf sie einfallendes Licht gerade so reflektieren, dass sich die gewünschte Lichtverteilung ergibt.

Alternativ oder ergänzend zu einem Reflektor 38 kann auch ein Licht brechende Optik wie eine Linse oder eine Licht brechende und durch interne Totalreflexionen richtende Optik aus transparentem Material zur Erzeugung der inneren Lichtverteilung verwendet werden. Eine die innere Lichtverteilung erzeugende Optik wird hier auch als Primäroptik 36 bezeichnet.

Eine Blende 42 ist im Fokalbereich der Primäroptik 36 und der Sekundäroptik 32 angeordnet und dient dazu, durch Abschattung eine erwünschte Form der inneren Lichtverteilung zu erzeugen. Eine durch die Blende 42 erzeugte Hell-Dunkel-Grenze der inneren Lichtverteilung wird zum Beispiel in die äußere Lichtverteilung projiziert, um zum Beispiel eine Abblendlichtverteilung zu erzielen. Die Blende 42 ist in einer bevorzugten Ausgestaltung eine Blendenwalze mit einer Oberfläche, die von einer reinen Zylinderform abweicht und je nach Winkelstellung der Blendenwalze unterschiedlich geformte Blendenkanten und Blendenradien R, r bereitstellt. Durch Verändern der Winkellage lässt sich so die Form und Lage einer Hell-Dunkel-Grenze variieren und/oder eine Lichtverteilung ohne ausgeprägte Hell-Dunkel-Grenze erzeugen.

Die Qualität der äußeren Lichtverteilung hängt insbesondere von dem Abstand 58 der Sekundäroptik 32 von der inneren Lichtverteilung ab, wie bereits eingangs erläutert worden ist. Der Abstand 58 entspricht in etwa einer mittleren Brennweite der Sekundäroptik.

Aufgrund der Dispersion, also aufgrund der Wellenlängenabhängigkeit des Licht brechenden Materials der Projektionslinse 34 können sich insbesondere Farbsäume an der Hell-Dunkel-Grenze in der äußeren Lichtverteilung ergeben, wenn der Abstand nicht korrekt ist.

Die Figur 2 zeigt insbesondere ein Projektions-Lichtmodul 20 für einen Kraftfahrzeugscheinwerfer 10 mit einer Komplexlichtquelle 44. Die Komplexlichtquelle 44 weist ein Trägerelement 46, an dem ein Linsenhalter 48 befestigt werden kann. Das Trägerelement 46 ist bevorzugt ein Verbundteil aus einer ersten Trägerstruktur 50 aus Metall und einer zweiten Trägerstruktur 52 aus Kunststoff. Das Verbundteil wird zum Beispiel dadurch hergestellt, dass ein Teil der ersten Trägerstruktur 50 in eine Spritzgussform eingelegt wird, mit der die zweite Trägerstruktur 52 hergestellt wird. Beim Herstellen der zweiten Trägerstruktur 52 wird dann der eingelegte Teil der ersten Trägerstruktur 50 in das Material der zweiten Trägerstruktur 52 eingebettet, so dass sich beim Aushärten des Materials der zweiten Trägerstruktur 52 das Verbundteil ergibt.

Durch einen solchen Verbund werden die Lagetoleranzen der verschiedenen an dem Trägerelement 46 montierten Bauelemente wie der Lichtquelle 40, der Blende 42 und der Primäroptik 36 minimiert.

Die metallische erste Trägerstruktur 50 besitzt eine hohe Wärmekapazität und Wärmeleitfähigkeit, was für eine effektive Entwärmung einer als Lichtquelle 40 verwendeten Halbleiterlichtquelle günstig ist. Die Halbleiterlichtquelle ist bevorzugt in gutem thermischen Kontakt auf der ersten Trägerstruktur 50 montiert.

Die bevorzugt aus Kunststoff bestehende zweite Trägerstruktur 52 hat den Vorteil, dass sich komplexe Formen, die zur Befestigung der Blende 42, des bei einer verstellbaren Blende 42 erforderlichen Blendenantriebs, der Anbindung des Antriebs einer gegebenenfalls vorhandenen Kurvenlichtfunktion, der zugehörigen Lagerung und insbesondere der Befestigungsstrukturen für die Sekundäroptik 32 durch ein Kunststoffspritzgussteil als Linsenhalter 48 vergleichsweise einfach und kostengünstig verwirklichen lassen.

Der Linsenhalter 48 weist erste Führungselemente 54 auf, und das Trägerelement 46 weist zweite Führungselemente 56 auf. Dabei greifen die ersten Führungselemente 54 und die zweiten Führungselemente 56 ineinander.

Die ersten Führungselemente 54 und die zweiten Führungselemente 56 sind aufeinander abgestimmt dazu eingerichtet, eine gegeneinander erfolgende Verschiebung zu erlauben, die parallel zu der optischen Achse 14 des Projektions-Lichtmoduls 20 erfolgt. In den beiden anderen Raumrichtungen erlauben sie dagegen keine Relativbewegung zwischen dem Linsenhalter 48 und dem Trägerelement 46.

Die Verschiebbarkeit erlaubt eine Einstellung des Abstands 58 zwischen der Projektionslinse 34 und der inneren Lichtverteilung. Die Verschiebbarkeit erlaubt insbesondere die Einstellung eines Abstands 58, bei der störende Farbeffekte, die an der Hell-Dunkel-Grenze in der zweiten Lichtverteilung auftreten, minimiert sind.

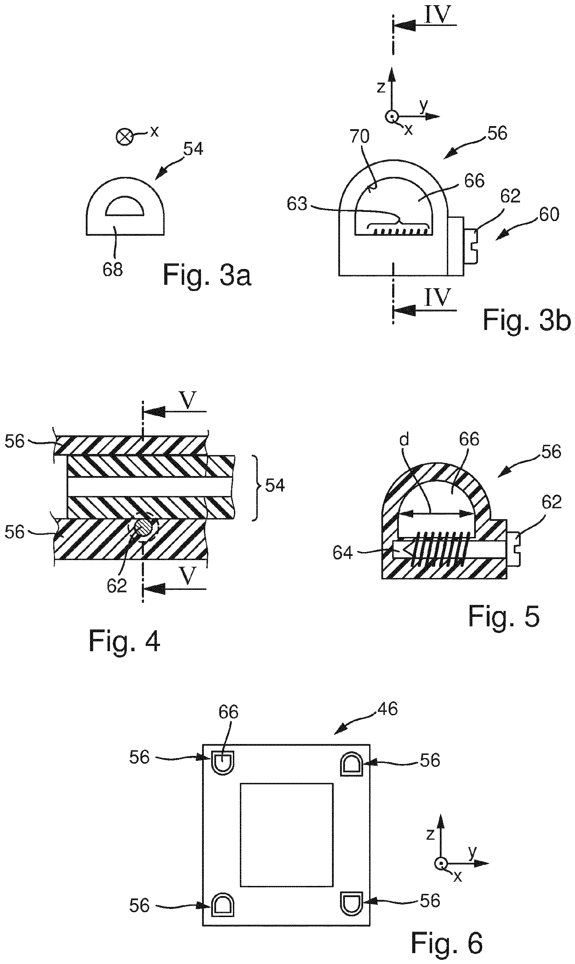

Darüber hinaus weist das Projektions-Lichtmodul 20 Feststellelemente 60 (vergleiche Fig. 3) auf. Bei den Feststellelementen handelt es sich bevorzugt um Schrauben 62 (vergleiche Fig. 3). Die Schrauben 62 werden bevorzugt in Bohrungen 64 in den zweiten Führungselementen 56 geführt, die quer zur optischen Achse 14 ausgerichtet und so angeordnet sind, dass die ersten Führungselemente 54 und die zweiten Führungselemente 56 beim Eindrehen der Feststellelemente gegeneinander verspannt werden.

Bei gelösten Feststellelementen 60 werden die ersten Führungselemente 54 und die zweiten Führungselemente 56 daher nicht gegeneinander verspannt und sind daher parallel zur optischen Achse 14 gegeneinander verschiebbar. In diesem Zustand wird die Farbsaumkorrektur durchgeführt. Dazu wird der Abstand 58 zwischen der Projektionslinse 34 und der inneren Lichtverteilung durch Verschieben der ersten Führungselemente 54 gegen die zweiten Führungselemente 56 solange verändert, bis der störende Farbsaum minimal ist. Anschließend wird dieser Abstand 58 durch Feststellen der Feststellelemente 60 fixiert.

Dazu werden die als Feststellelemente 60 dienenden Schrauben 62 eingedreht. Die daraus resultierende Verspannung sorgt dann für eine Blockierung einer weiteren Verschiebung. Ein einmal eingestellter Abstand 58 bleibt dadurch erhalten.

In einer bevorzugten Ausgestaltung bestehen wenigstens die ersten Führungselemente 54, bevorzugt aber die ersten Führungselemente 54 und die zweiten Führungselemente 56 aus Kunststoff. Die ersten Führungselemente 54 sind dabei bevorzugt ein stoffschlüssiger Bestandteil des Linsenhalters 48 und werden zusammen mit diesem in einem Spritzgießvorgang erzeugt.

Die Feststellelemente 60 sind dazu eingerichtet und angeordnet, sowohl in die ersten Führungselemente 54 als auch in die zweiten Führungselemente 56 einzugreifen und eine gegeneinander erfolgende Verschiebung der Führungselemente 54 und 56 zu blockieren.

Dabei greifen die ersten Führungselemente 54 und die zweiten Führungselemente 56 ineinander, wobei sie aufeinander abgestimmt dazu eingerichtet, bei gelösten Feststellelementen 60 eine gegeneinander erfolgende Verschiebung zu erlauben, die parallel zu einer optischen Achse des Projektionslichtmoduls erfolgt.

Die Figur 3a zeigt eine Vorderansicht eines einzelnen ersten Führungselementes 54, und die Figur 3b zeigt eine Vorderansicht eines einzelnen zweiten Führungselementes. Die Blickrichtung liegt dabei im Fall der Fig. 3a in der Hauptausbreitungsrichtung des Lichtes und im Fall der Fig. 3b entgegengesetzt zur Hauptausbreitungsrichtung des Lichtes. In Bezug auf die Richtungsangaben der Figuren 1 und 2 entspricht die Blickrichtung also bei Fig. 3a der x-Richtung und bei Fig. 3b der negativen x-Richtung.

Das zweite Führungselement 56 weist eine Ausnehmung 66 auf, deren Querschnitt ein Negativ des Querschnitts 68 des ersten Führungselements 54 darstellt. Dabei sind die Abmessungen des ersten Führungselementes 54 in der Zeichenebene gerade so viel kleiner als die lichte Weite der Ausnehmung 66 im zweiten Führungselement 56, dass das erste Führungselement 54 in der Ausnehmung 66 des zweiten Führungselements 56 senkrecht zur Zeichenebene und damit parallel zur optischen Achse verschiebbar ist und gleichzeitig durch die Wände 70 der Ausnehmung 66 im zweiten Führungselement 56 so festgehalten wird, das in den zur optischen Achse komplementären Raumrichtungen y, z keine Relativbewegung zwischen dem ersten Führungselement 54 und dem zweiten Führungselement 56 möglich ist. Die Bewegungsmöglichkeiten des ersten Führungselementes 54 relativ zum zweiten Führungselement 56 sind mit den Bewegungsmöglichkeiten des Linsenhalters 48 relativ zum Trägerelement 46 identisch.

Figur 3b zeigt auch eine Ausgestaltung eines Feststellelements 60, das dazu eingerichtet und angeordnet ist, so weit in das erste Führungselement 54 als auch in das zweite Führungselement 56 einzugreifen und eine gegeneinander erfolgende Verschiebung der beiden Führungselemente 54, 56 zu blockieren. In dem dargestellten Ausführungsbeispiel handelt es sich bei dem Feststellelement 60 um eine Schraube 62, die quer zur Richtung der möglichen Verschiebung des ersten Führungselementes 54 relativ zum zweiten Führungselement 56 angeordnet ist. Die Schraube 62 wird in einer Bohrung 64 im zweiten Führungselement 56 gehalten.

Die Bohrung 64 ist relativ zur Ausnehmung 66 im zweiten Führungselement 54 so angeordnet, dass Gewindeflanken 63 der durch die Bohrung 64 geführten und in die Bohrung 64 eingedrehten Schraube 62 in die Ausnehmung 66 im zweiten Führungselement 56 hineinragen. Der Durchmesser der Bohrung 64 entspricht bevorzugt dem Kerndurchmesser der Schraube 62 oder ihrem Außendurchmesser. Die Bohrung 64 ist insbesondere so angeordnet, dass die Gewindeflanken der Schraube 62 beim Eindrehen in die Bohrung 64, die sich im zweiten Führungselement 56 befindet, in ein erstes Führungselement 54 einschneiden, das sich in der Ausnehmung 66 des zweiten Führungselementes 56 befindet. Um ein solches Einschneiden zu ermöglichen, ist es vorteilhaft, wenn das erste Führungselement 54 aus Kunststoff besteht. Bevorzugt ist auch, dass es sich bei den Schrauben um Schrauben mit einem selbstschneidenden Gewinde handelt.

Durch das Eindrehen der Schraube 62 wird das erste Führungselement 54 damit an die der Schraubenlängsachse gegenüberliegende Innenwand des zweiten Führungselements 56 angedrückt. Durch diesen Andruck wird eine Haftreibungskraft zwischen dem ersten Führungselement 54 und dem zweiten Führungselement 56 erzeugt. Durch die Haftreibungskraft wird die bei gelöstem Feststellelement 60 sonst mögliche Verschiebung zwischen erstem Führungselement 54 und zweitem Führungselement 56 durch einen Kraftschluss blockiert. Darüber hinaus wird durch das Einschneiden der Gewindeflanken in das Material, bevorzugt das Kunststoffmaterial des ersten Führungselements 54 ein Formschluss zwischen dem ersten Führungselement 54 und der Schraube 62 und damit auch ein Formschluss des ersten Führungselementes 54 mit dem zweiten Führungselement 56 erzeugt.

Figur 4 zeigt einen Schnitt durch eine solche Verbindung zwischen dem ersten Führungselement 54 und dem zweiten Führungselement 56 längs der Linie IV-IV in Figur 3. Figur 4 verdeutlicht damit insbesondere die Lage der im Zusammenhang mit der Figur 3 beschriebenen Bohrung 64, die zur Aufnahme und Führung der Schraube 62 als Feststellelement 60 dient. Figur 4 zeigt insbesondere, dass die Bohrung 64 im zweiten Führungselement 56 so angeordnet ist, dass die einzudrehende Schraube 62 durch die Bohrung 64 geführt wird. Der schraffierte Bereich der Schraube 62 entspricht dabei dem Kern der Schraube 62, während die gestrichelte und um den Kern herum verlaufende Linie die Höhe der Gewindeflanken markiert, mit der die Schraube 62 in das erste Führungselement 54 und in das zweite Führungselement 64 eingreift, wobei das Eingreifen hier ein Einschneiden ist.

Figur 5 zeigt einen Schnitt durch den Gegenstand der Figur 4 längs der Linie VI-VI. Figur 5 verdeutlicht insbesondere die Lage der Bohrung 64 relativ zur Ausnehmung 66. Die Bohrung 64 liegt relativ zur Ausnehmung 66 bevorzugt so, dass eine Begrenzungsfläche der Ausnehmung die Zylindermantelfläche der Bohrung 64 berührt oder durchbricht. Dadurch liegt die Bohrung 64 insbesondere relativ zur Ausnehmung 66 so, dass die in die Bohrung eingedrehte Schraube 62 eine Kraft auf das erste Führungselement 54 ausübt. Der Querschnitt der Ausnehmung 66 im zweiten Führungselement 56 und der dazu komplementäre Querschnitt des ersten Führungselementes 54 in der zur Verschieberichtung senkrechten Ebene ist bevorzugt so, dass sich der jeweilige Durchmesser d des Querschnitts in der Richtung der Längsachse der Schraube mit zunehmendem radialen Abstand von der Schraube 62 verringert.

Dadurch wird das erste Führungselement 54 im zweiten Führungselement 56 zentriert. Besonders bevorzugt ist, dass der Querschnitt des ersten Führungselements 54 und des zweiten Führungselements 56 eine gewölbte Form, insbesondere einen Halbkreis, oder eine Dreiecksform aufweist. Diese Querschnittsformen bewirken die gewünschte Zentrierung.

In einer anderen Ausgestaltung wird die Schraube so angeordnet, dass ihre Längsachse in der Figur 4 in der gestrichelt dargestellten Schnittebene liegt. Ein Eindrehen der im zweiten Führungselement beispielsweise durch ein Gewinde geführten Schraube führt dann dazu, dass die Schraubenspitze das erste Führungselement gegen die der Schraubenspitze gegenüberliegende Innenwand des zweiten Führungselements drückt. Auch durch diese Ausgestaltung wird ein Kraftschluss erzeugt, der eine weitere Verschiebung der ersten und zweiten Führungselemente relativ zueinander blockieren würde. Auch diese Lösung wird als erfinderisch betrachtet.

Im direkten Vergleich dieser Lösung mit der Lösung, die im Zusammenhang mit den Figuren 3 bis 5 beschrieben ist, ergibt sich bei der letzteren jedoch ein bedeutender Vorteil, der im folgenden noch näher erläutert wird.

Das erste Führungselement 54, also dass zum Linsenhalter 48 zugehörige Führungselement ist bevorzugt aus Kunststoff und ein stoffschlüssiger Bestandteil des Linsenhalters 48, wie er zum Beispiel durch einen Spritzgießvorgang hergestellt wird. Das Kunststoffmaterial hat den Vorteil einer größeren Gestaltungsfreiheit gegenüber einer Verwirklichung des Linsenhalters als metallisches Teil. Kunststoff hat jedoch die nachteilige Eigenschaft, sich unter andauernder Einwirkung einer Kraft plastisch zu verformen, was auch als Kriechprozess bezeichnet wird. Dadurch kann sich eine kraftschlüssige Verbindung lockern. In dem beschriebenen Umfeld treten im Fahrbetrieb große Beschleunigungskräfte auf, insbesondere beim Überfahren einer schlechten Wegstrecke. In Verbindung mit dem beschriebenen Kriechprozess könnte dies unter Umständen ein Risiko begründen, dass sich die einmal nach der Farbsaumkorrektur fixierte Verbindung zwischen dem ersten Führungselement 54 und dem zweiten Führungselement 56 lockert und so zum Auftreten unerwünschter Farbsäume führt.

Dies wird bei der bevorzugten Ausgestaltung, die in Verbindung mit den Figuren 3 bis 5 beschrieben ist, vermieden. Diese Verbindung ergibt sich dabei insbesondere durch die Kombination eines Kraftschlusses und eines Formschlusses, also durch das Verbinden der durch die Schraube 62 quer zu ihrer Längsachse ausgeübten Andruckkraft mit einem Einschneiden von Gewindeflanken der Schraube 62 in das Kunststoffmaterial des ersten Führungselementes 54. Der durch das Einschneiden bewirkte Formschluss wird durch den beschriebenen Kriechprozess nicht beeinträchtigt, sodass diese Lösung eine größere Zuverlässigkeit der Verbindung und damit eine größere langfristige Stabilität der einmal vorgenommenen Farbsaumkorrektur sichert.

Figur 6 zeigt eine Vorderansicht des Trägerelements 46 mit vier zweiten Führungselementen 56. Die zweiten Führungselemente 56 sind dabei an vier Ecken des Trägerelements 46 angeordnet und so ausgerichtet, dass die Wölbung (respektive die Verringerung des Querschnitts 66, die jeder Querschnitt 66 eines zweiten Führungselements 56 aufweist, bei einander benachbarten zweiten Führungselementen 56 jeweils in entgegengesetzte Raumrichtungen zeigt. Beim linken oberen zweiten Führungselement 56 ist die Wölbung zum Beispiel nach unten und damit in die negative z-Richtung gerichtet, während die Wölbung der zu diesem zweiten Führungselement 56 benachbarten zweiten Führungselemente 56 oben rechts und unten links jeweils in die positive z-Richtung, also nach oben weist.

Im Gegensatz zu einer prinzipiell auch möglichen alternativen Ausgestaltung, bei der sämtliche Wölbungen in die gleiche Richtung weisen, ergibt sich dadurch beim Eindrehen der Schrauben, das in der Anordnung, wie sie in der Fig. 6 dargestellt ist, auf der linken Seite von links nach rechts und auf der rechten Seite von rechts nach links erfolgt, keine Veränderung der Lage des Linsenhalters in Bezug auf das Trägerelement in der y-z-Ebene, da die jeweils quer zu den Längsachsen der Schrauben entstehenden Kräfte paarweise entgegengesetzt zueinander gerichtet sind und sich daher weitgehend kompensieren. Darüber hinaus stellt diese Ausgestaltung eine Lagekodierung dar, die ein Lage-richtige Montage einer asymmetrischen Sekundärlinse erlaubt und die eine nicht Lage-richtige Montage ausschließt.

Alternativ zu Schrauben können auch Stifte verwendet werden, die an Stelle eines Gewindes wenigstens eine Schneidkante aufweisen, die parallel zur Längsachse eines solchen Stiftes verläuft und aus dem Kerndurchmesser eines solchen Stiftes seitlich herausragt. Durch ein Eindrücken eines solchen Stiftes in die beschriebene Bohrung 64, das so erfolgt, dass die Schneidkante in das Material des ersten Führungselementes einschneidet, kann ebenfalls die vorteilhafte Kombination eines Formschlusses und eines Kraftschlusses erzielt werden. Schrauben haben jedoch den Vorteil, ohne größeren Aufwand wieder lösbar zu sein, so dass der Linsenhalter mit der zum Beispiel im Linsenhalter fest verklebten Linse gegen ein anders gestaltetes Ersatzteil ausgetauscht werden kann.

Die Anordnung der als Stifte realisierten ersten Führungselemente und der als hohle Führungen realisierten zweiten Führungselemente kann auch vertauscht sein, so dass die als Stifte realisierten Führungselemente Bestandteile des Trägerelements und die als hohle Führungen realisierten zweiten Führungselemente Bestandteile des Linsenhalters sind.

## Patentansprüche

1. Projektions-Lichtmodul (20) für einen Kraftfahrzeugscheinwerfer (10), mit einer Komplexlichtquelle (44), die eine bauliche Einheit aus einer Lichtquelle (40), einer Primäroptik (36), einer Blende (42) sowie einem diese Elemente zusammenhaltenden Trägerelement (46) aufweist, und mit einem Linsenhalter (48), mit dem eine Sekundäroptik (32) des Projektions-Lichtmoduls an dem Trägerelement befestigt ist, wobei der Linsenhalter erste Führungselemente (54) und das Trägerelement zweite Führungselemente (56) aufweist, und dass das Projektions-Lichtmodul Feststellelemente (60) aufweist, die dazu eingerichtet und angeordnet sind, sowohl in die ersten Führungselemente als auch in die zweiten Führungselemente einzugreifen und eine gegeneinander erfolgende Verschiebung der Führungselemente (54, 56) zu blockieren, **dadurch gekennzeichnet dass**, die ersten Führungselemente und die zweiten Führungselemente ineinander greifen und aufeinander abgestimmt dazu eingerichtet sind, bei gelösten Feststellelementen eine gegeneinander erfolgende Verschiebung zu erlauben, die parallel zu einer optischen Achse (14) des Projektionslichtmoduls erfolgt, wobei durch die gegeneinander erfolgende Verschiebung ein Abstand zwischen der Sekundäroptik (32) und einer Blendenkante der Blende (42) einstellbar und durch Feststellen der

2. Projektions-Lichtmodul (20) nach Anspruch 1, **dadurch gekennzeichnet, dass** die Feststellelemente (60) Schrauben (62) sind.

3. Projektions-Lichtmodul (20) nach Anspruch 1, **dadurch gekennzeichnet, dass** die Feststellelemente (60) Stifte sind, die wenigstens eine Schneidkante aufweisen, die parallel zur Längsachse eines solchen Stiftes verläuft und aus dem Kerndurchmesser eines solchen Stiftes seitlich herausragt.

4. Projektions-Lichtmodul (20) nach einem der vorhergehenden Ansprüche, **dadurch gekennzeichnet, dass** die Feststellelemente (60) in Bohrungen (64) in den zweiten Führungselementen geführt werden, die quer zur optischen Achse ausgerichtet und so angeordnet sind, dass die ersten Führungselemente (54) und die zweiten Führungselemente (56) beim Eindrehen oder Einschieben der Feststellelemente (60) gegeneinander verspannt werden.

5. Projektions-Lichtmodul (20) nach Anspruch 4, **dadurch gekennzeichnet, dass** die Bohrung (64) relativ zu einer Ausnehmung (66) im zweiten Führungselement (56) so angeordnet ist, dass Gewindeflanken oder Schneidkanten eines durch die Bohrung (64)geführten Feststellelements (60) in die Ausnehmung (66) im zweiten Führungselement (56) hineinragen, so dass Gewindeflanken oder Schneidkanten des Feststellelementes (60) beim Eindrehen oder Einschieben in die Bohrung (64), die sich im zweiten Führungselement 56 befindet, in ein erstes Führungselement (54)einschneiden, das sich in der Ausnehmung (66) des zweiten Führungselementes (56) befindet.

6. Projektions-Lichtmodul (20) nach Anspruch 5, **dadurch gekennzeichnet, dass** der Durchmesser der Bohrung (64) einem Kerndurchmesser oder einem Außendurchmesser des Feststellelements entspricht.

7. Projektions-Lichtmodul (20) nach einem der Ansprüche 5 oder 6, **dadurch gekennzeichnet, dass** die Bohrung 64 relativ zur Ausnehmung (66) so liegt, dass eine Begrenzungsfläche der Ausnehmung die Zylindermantelfläche der Bohrung (64) berührt oder durchbricht.

8. Projektions-Lichtmodul (20) nach einem der Ansprüche 5 bis 7, **dadurch gekennzeichnet, dass** der Querschnitt der Ausnehmung (66) im zweiten Führungselement (56) und der dazu komplementäre Querschnitt des ersten Führungselementes (54) in der zur Verschieberichtung senkrechten Ebene eine Form besitzt, bei der sich der jeweilige Durchmesser (d) des Querschnitts (66) in der Richtung der Längsachse der Schraube (62) mit zunehmendem radialen Abstand von der Schraube (62) verringert.

9. Projektions-Lichtmodul (20) nach Anspruch 8, **dadurch gekennzeichnet, dass** die zweiten Führungselemente (56) an dem Trägerelement (46) so angeordnet und so ausgerichtet sind, dass sich der Durchmesser eines Querschnitts, den ein zweites Führungselement (56) in einer zur optischen Achse senkrechten Ebene aufweist, sich in einer Richtung verringert, die zu der Richtung entgegengesetzt ist, in der sich der Durchmesser des Querschnitts eines benachbarten zweiten Führungselementes (56) verringert.

10. Projektions-Lichtmodul (20) nach einem der vorhergehenden Ansprüche, **dadurch gekennzeichnet, dass** wenigstens die ersten Führungselemente (54) aus Kunststoff bestehen.

## Claims

1. Projection light module (20) for a motor vehicle headlamp (10), comprising a complex light source (44) that has a structural unit consisting of a light source (40), a primary optic (36), an aperture (42) and a carrier element (46) which holds said elements together, said module also comprising a lens holder (48) by means of which a secondary optic (32) of the projection light module is fastened to the carrier element, the lens holder comprising first guide elements (54) and the carrier element comprising second guide elements (56), and the projection light module comprising securing elements (60) that are designed and arranged for engaging in both the first guide elements and the second guide elements and blocking the guide elements (54, 56) from sliding relative to one another, **characterized in that** the first guide elements and the second guide elements interlock and are coordinated with one another so as to allow them to slide relative to one another in parallel with an optical axis (14) of the projection light module when the securing elements are loosened, it being possible for a spacing between the secondary optic (32) and an aperture edge of the aperture (42) to be adjusted by the guide elements sliding relative to one another and for said spacing to be fixed by securing the securing elements (60).

2. Projection light module (20) according to claim 1, **characterized in that** the securing elements (60) are screws (62).

3. Projection light module (20) according to claim 1, **characterized in that** the securing elements (60) are pins that comprise at least one cutting edge that extends in parallel with the longitudinal axis of such a pin and protrudes laterally from the core diameter of such a pin.

4. Projection light module (20) according to any of the preceding claims, **characterized in that** the securing elements (60) are guided into holes (64) in the second guide elements that are oriented transversely to the optical axis and arranged such that the first guide elements (54) and the second guide elements (56) are tensioned with respect to one another when the securing elements (60) are screwed in or pushed in.

5. Projection light module (20) according to claim 4, **characterized in that** the hole (64) is arranged with respect to a recess (66) in the second guide element (56) such that thread flanks or cutting edges of a securing element (60) that is guided through the hole (64) protrude into the recess (66) in the second guide element (56), such that thread flanks or cutting edges of the securing element (60), when screwed into or pushed into the hole (64) located in the second guide element 56, cut into a first guide element (54) located in the recess (66) of the second guide element (56).

6. Projection light module (20) according to claim 5, **characterized in that** the diameter of the hole (64) corresponds to a core diameter or an outer diameter of the securing element.

7. Projection light module (20) according to claim 5 or claim 6, **characterized in that** the hole 64 is positioned with respect to the recess (66) such that a delimiting face of the recess is in contact with or breaches the cylindrical lateral face of the hole (64).

8. Projection light module (20) according to any of claims 5 to 7, **characterized in that**, in the plane that is perpendicular to the sliding direction, the cross section of the recess (66) in the second guide element (56) and the cross section of the first guide element (54), which cross section is complementary to the cross section of the recess, have a shape in which the diameter (d) of the cross section (66) decreases in the direction of the longitudinal axis of the screw (62) as the radial spacing from the screw (62) increases in each case.

9. Projection light module (20) according to claim 8, **characterized in that** the second guide elements (56) are arranged on the carrier element (46) and oriented such that the diameter of a cross section that includes a second guide element (56) in a plane perpendicular to the optical axis decreases in a direction counter to the direction in which the diameter of the cross section of an adjacent second guide element (56) decreases.

10. Projection light module (20) according to any of the preceding claims, **characterized in that** at least the first guide elements (54) are made of plastics material.

## Revendications

1. Module de lumière à projection (20) pour phare de véhicule automobile (10), comprenant une source lumineuse complexe (44) dotée d'une unité structurelle constituée d'une source lumineuse (40), d'une optique primaire (36), d'un diaphragme (42) ainsi que d'un élément support (46) maintenant ensemble ces éléments, et comprenant un support de lentille (48) avec lequel une optique secondaire (32) du module de lumière à projection est fixée sur l'élément support, le support de lentille présentant des premiers éléments de guidage (54) et l'élément support des seconds éléments de guidage (56), et le module de lumière à projection comportant des éléments de blocage (60) qui sont conçus et disposés pour s'engager tant dans les premiers éléments de guidage que dans les seconds éléments de guidage et pour bloquer un déplacement opposé des éléments de guidage (54, 56), **caractérisé en ce que** les premiers éléments de guidage et les seconds éléments de guidage viennent en prise mutuellement et, coordonnés entre eux, sont conçus pour permettre, une fois les éléments de blocage libérés, un déplacement opposé qui s'effectue parallèlement à un axe optique (14) du module de lumière à projection, le déplacement opposé permettant de régler une distance entre l'optique secondaire (32) et une arête du diaphragme (42) et de la fixer par l'immobilisation des éléments de blocage (60).

2. Module de lumière à projection (20) selon la revendication 1, **caractérisé en ce que** les éléments de blocage (60) sont des vis (62).

3. Module de lumière à projection (20) selon la revendication 1, **caractérisé en ce que** les éléments de blocage (60) sont des broches qui présentent au moins une arête de coupe qui s'étend parallèlement à l'axe longitudinal d'une telle broche et fait saillie latéralement du diamètre d'âme d'une telle broche.

4. Module de lumière à projection (20) selon l'une des revendications précédentes, **caractérisé en ce que** les éléments de blocage (60) sont guidés dans des alésages (64) pratiqués dans les seconds éléments de guidage, qui sont orientés transversalement à l'axe optique et agencés de façon telle que les premiers éléments de guidage (54) et les seconds éléments de guidage (56) sont serrés les uns contre les autres lors du serrage ou de l'insertion des éléments de blocage (60).

5. Module de lumière à projection (20) selon la revendication 4, **caractérisé en ce que** l'alésage (64) est disposé par rapport à un évidement (66) situé dans le second élément de guidage (56) de façon telle que des flancs de filet ou arêtes de coupe d'un élément de blocage (60) guidé à travers l'alésage (64) pénètrent dans l'évidement (66) situé dans le second élément de guidage (56), de sorte que les flancs de filet ou arêtes de coupe de l'élément de blocage (60), lors du serrage ou de l'insertion dans l'alésage (64) se trouvant dans le second élément de guidage (56), opèrent une entaille dans un premier élément de guidage (54) qui se trouve dans l'évidement (66) du second élément de guidage (56).

6. Module de lumière à projection (20) selon la revendication 5, **caractérisé en ce que** le diamètre de l'alésage (64) correspond à un diamètre d'âme ou un diamètre extérieur de l'élément de blocage.

7. Module de lumière à projection (20) selon l'une des revendications 5 ou 6, **caractérisé en ce que** l'alésage (64) est situé par rapport à l'évidement (66) de façon telle qu'une surface de délimitation de l'évidement touche ou creuse la surface d'enveloppe cylindrique de l'alésage (64).

8. Module de lumière à projection (20) selon l'une des revendications 5 à 7, **caractérisé en ce que** la section transversale de l'évidement (66) dans le second élément de guidage (56) et la section transversale complémentaire à celle-ci du premier élément de guidage (54) possèdent, dans le plan perpendiculaire à la direction de déplacement, une forme telle que le diamètre (d) respectif de la section transversale (66) dans la direction de l'axe longitudinal de la vis (62) diminue à mesure qu'augmente la distance radiale par rapport à la vis (62).

9. Module de lumière à projection (20) selon la revendication 8, **caractérisé en ce que** les seconds éléments de guidage (56) sont disposés et orientés au niveau de l'élément support (46) de telle sorte que le diamètre d'une section transversale que présente un second élément de guidage (56) dans un plan perpendiculaire à l'axe optique diminue dans une direction qui est opposée à la direction dans laquelle le diamètre de la section transversale d'un second élément de guidage (56) adjacent diminue.

10. Module de lumière à projection (20) selon l'une des revendications précédentes, **caractérisé en ce qu'**au moins les premiers éléments de guidage (54) sont réalisés en matière plastique.
